# NEUE EUROPÄISCHE PATENTSCHRIFT

(11) **EP 2 177 350 B2**
(45) Veröffentlichungstag und Bekanntmachung des Hinweises auf die Entscheidung über den Einspruch: **26.02.2020**
(45) Hinweis auf die Patenterteilung: 05.12.2012
(21) Anmeldenummer: 09012919.8
(22) Anmeldetag: 13.10.2009
(51) Int. Cl.: B32B 3/30, A43B 13/22, B32B 25/00, B60S 1/38, F16J 15/02

(54) **Körper mit das Reibungsverhalten verbessernder Oberflächenstruktur**
Body with surface structure improving friction performance
Corps doté d'une structure de surface améliorant le comportement de friction

(30) Priorität: 14.10.2008 DE 102008051474
(43) Veröffentlichungstag der Anmeldung: 21.04.2010
(73) Patentinhaber: OVD Kinegram AG, 6300 Zug (CH); Max-Planck-Gesellschaft zur Förderung der Wissenschaften e.V., 80539 München (DE)
(72) Erfinder: Schilling, Dr. Andreas, 6332 Hagendorn (CH); Horb, Prof. Dr. Stanislav N., 24107 Kiel-Suchsdorf (DE); Varenberg, Dr. Michael, 32583 Haifa (IL)
(74) Vertreter: Zinsinger, Norbert

(56) Entgegenhaltungen:
- EP-A2- 0 383 594
- EP-A2- 1 063 071
- WO-A1-2005/018879
- DE-A1- 3 622 076
- DE-A1- 10 207 143
- DE-C1- 4 300 889
- DE-C1- 10 207 194
- GB-A- 467 235
- JP-A- 2000 071 590
- US-A- 3 932 950
- US-A- 5 327 615
- US-A1- 2008 034 529
- US-B1- 6 764 745
- DICKIE-TAMIYA: "Reifen:" Internet citation, [Online] 2010, XP002567973 Gefunden im Internet: URL:http://www.tamiya.de/de/produkte/ersat ztuningteilezubehoer/reifen.htm> [gefunden am 2010-02-08]
- Dissertation Sylvia Haunschild aus Ludwigshafen am Rhein, 2010

## Beschreibung

Die Erfindung betrifft einen Körper, bestehend aus einem elastomeren Material oder aufweisend eine äußere elastomere Schicht, wobei in die Oberfläche des elastomeren Körpers oder in die äußere elastomere Schicht des Körpers eine das Reibungsverhalten verbessernde Oberflächenstruktur abgeformt ist.

In zahlreichen technischen Anwendungen spielt das Reibungsverhalten der Oberfläche eines bewegten Körpers eine entscheidende Rolle. In flüssigen Medien, zum Beispiel in Öl, kann die Reibkraft im Vergleich zur trockenen Oberfläche deutlich sinken, wodurch beispielsweise ein Reibradgetriebe durchdrehen kann.

Andererseits kann es bei trockenen Oberflächen zum sogenannten Stick-Slip-Effekt kommen, bei dem der zeitliche Reibkraftverlauf ständig stark wechselt, so dass Schwingungen ausgelöst werden, die sich als Quietschen oder Rattern darstellen. Beispiele sind quietschende Schienenfahrzeuge und ratternde Scheibenwischerblätter.

Aufgabe der vorliegenden Erfindung ist es, einen Körper mit einer Oberflächenstruktur mit verbessertem Reibungsverhalten anzugeben. Erfindungsgemäß wird diese Aufgabe mit einem Körper nach Anspruch 1 gelöst.

Der Körper mit der vorgeschlagenen Oberflächenstruktur zeichnet sich dadurch aus, dass eine Flüssigkeit durch die mit einer Anpresskraft angepresste Oberfläche eines mit dem elastomeren Körper kämmenden Körpers von der Oberfläche der Erhebungen verdrängt wird und über die Kanäle abgeleitet wird. Der Effekt wird dadurch unterstützt, dass die Erhebungen sich verformen und unter Belastung ausweichen. Mit Hilfe der erfindungsgemäßen Oberflächenstruktur werden also Bereiche auf der Oberfläche des elastomeren Körpers bereitgestellt, die auch bei Kontakt mit einer flüssigkeitsbenetzten Oberfläche im Wesentlichen flüssigkeitsfrei bleiben und daher auch unter diesen Bedingungen noch eine ausreichende Reibungskraft bereitstellen.

Weiter wird der insbesondere bei der Paarung von trockenen Oberflächen auftretende Stick-Slip-Effekt eliminiert. Der Stick-Slip-Effekt bezeichnet das Ruckgleiten von gegeneinander bewegten Festkörpern. Dabei tritt eine schnelle Bewegungsfolge aus Haften, Verspannen, Trennen und Abgleiten der in Kontakt befindlichen Oberflächen auf. Die dabei erzeugten Schwingungen können als Geräusch abgestrahlt werden. Beispiele sind das Quietschen von Eisen- oder Straßenbahn bei Kurvenfahrt oder beim Bremsen und ratternde Scheibenwischer auf trockenen Autoscheiben. Die Verminderung des Stick-Slip-Effektes an der Oberfläche des erfindungsgemäßen Körpers kann dadurch erklärt werden, dass die in der Oberfläche ausgebildeten Erhebungen im Wesentlichen unabhängig voneinander beweglich sind und das Ruckgleiten nur noch an den wenigen Erhebungen auftritt, die nicht ausweichen können.

Der Bereich, in dem die Oberflächenstruktur in dem Körper abgeformt ist, kann hierbei die gesamte Oberfläche des Körpers umfassen oder nur einen Teil der Oberfläche des Körper umfassen, in dem das Reibungsverhalten des Körpers verbessert werden soll.

Elastomere zählen wie Thermoplaste und Duroplaste zu den Polymeren. Elastomere sind formfeste, aber elastisch verformbare Polymere, deren Glasübergangspunkt sich unterhalb der Raumtemperatur befindet und deren langkettige Makromoleküle weitmaschig und statistisch verteilt vernetzt sind. Über den Vernetzungsgrad sowie den Polymerisationsgrad, der ein Maß für die Länge der Makromoleküle ist, können Werkstoffeigenschaften wie Festigkeit und Viskosität eingestellt werden. Die Elastomere können sich bei Zug- und/oder Druckbelastung verformen, kehren aber danach wieder in ihre ursprüngliche, unverformte Gestalt zurück. Elastomere sind gummielastisch. Ein bekannter Vertreter der Elastomere ist Gummi. Bei einer bevorzugten Ausführungsform erfüllt das für den Körper vorgesehene Material die in der DIN 7724 angegebene Definition für ein Elastomer.

Wie sich herausgestellt hat, kann durch die Wahl der maximalen Abmessung das Reibungsverhalten entweder hinsichtlich einer maximalen Reibungskraft bei flüssigkeitsbedeckten Oberflächen oder hinsichtlich der Vermeidung des Stick-Slip-Effekts auf trockenen Oberflächen optimiert werden.

Weiter kann vorgesehen sein, dass die Stirnflächen der Erhebungen der Oberflächenstruktur gleichförmig ausgebildet sind und insbesondere die Form eines Quadrats, eines gleichschenkligen Dreiecks, regelmäßigen Sechsecks oder anderen regelmäßigen Vielecks besitzen.

In einer vorteilhaften Weiterbildung kann vorgesehen sein, dass die Erhebungen in hierarchischen Ebenen angeordnet sind, wobei jeweils kleinere Erhebungen auf größeren Erhebungen angeordnet sind. Auf diese Weise ist es möglich, für unterschiedliche Anpressdrücke unterschiedliches Reibungsverhalten bereitzustellen. Die in der obersten, d. h. in der äußeren Ebene angeordneten Erhebungen können bei steigendem Anpressdruck eingeebnet sein, so dass die in der darunter liegenden Ebene angeordneten flächenmäßig größeren Erhebungen aktiviert werden und so weiter, wenn weitere Ebenen vorgesehen sind. Auf diese Weise können auch mehrere Eigenschaften miteinander kombiniert werden. Beispielsweise kann die oberste Ebene hinsichtlich der Vermeidung des Stick-Slip-Effektes optimiert sein und eine weitere Ebene hinsichtlich einer maximalen Reibungskraft optimiert sein.

Weiter kann vorgesehen sein, dass die Erhebungen einen rechteckigen, trapezförmigen oder pilzförmigen Längsschnitt aufweisen. Der Längsschnitt steht auf der durch die Stirnflächen aufgespannten Ebene senkrecht. Durch die Wahl des Längsschnitts der Erhebungen kann das Deformationsverhalten der Erhebungen beeinflusst und optimiert werden. Die Bezeichnungen "rechteckig", "trapezförmig" und "pilzförmig" stehen für Klassen von Längsschnitten und schließen nicht aus, dass auch ein anderer Längsschnitt, der nicht in eine dieser Klassen eingeordnet werden kann, vorgesehen wird. Der Fachmann ist also nicht angehalten, Längsschnitte, die im Versuch ein gutes Verhalten zeigen, auszuschließen, wenn sie nicht in die vorgenannten Klassen einordenbar sind. Bei einem trapezförmiger Längsschnitt, der sich zur Stirnfläche der Erhebung verjüngt, kann beispielsweise die Breite der oberen Stirnseite im Mikrometerbereich liegen, so dass er makroskopisch als dreieckförmiger Querschnitt gedeutet werden kann.

Die Höhe der Erhebungen ist gemessen von der tiefsten Stelle der Kanäle bis zur Stirnfläche der Erhebung.

Es ist vorgesehen, dass die Höhe der Erhebungen 1 % bis 100 % der maximalen Abmessung der Stirnfläche der jeweiligen Erhebung ist. Dieser Bereich ist bevorzugt zur Ausbildung von Oberflächenstrukturen, die die Reibungskraft bei flüssigkeitsbedeckten Oberflächen erhöhen. Damit wird vermieden, dass die Erhebungen unter Belastung kippen.

Weiter kann vorgesehen sein, dass der Flächenanteil der Stirnflächen der Erhebungen an der Gesamtfläche der Stirnflächen der Erhebungen und Kanäle im Bereich von 5 % bis 99 % liegt.

In einer weiteren vorteilhaften Ausbildung kann vorgesehen sein, dass der Flächenanteil der Stirnflächen der Erhebungen an der Gesamtfläche im Bereich von 20 % bis 99 % liegt. Mit der Wahl des Flächenanteils der Erhebungen zur Gesamtfläche der Oberfläche steht ein weiterer Parameter zur Einstellung des Reibungsverhaltens bereit. Der vorgenannte Bereich ist bevorzugt zur Ausbildung von Oberflächen ohne Stick-Slip-Effekt.

Es kann vorgesehen sein, dass die Kanäle einen kantigen Querschnitt haben, beispielsweise einen rechteckigen, dreieckigen oder trapezförmigen Querschnitt haben. Zwischen prismenförmigen Erhebungen und zwischen zylinderförmigen Erhebungen, die im Längsschnitt wie die prismenförmigen Erhebungen rechteckig ausgebildet sind, weisen die Kanäle beispielsweise einen rechteckigen Querschnitt auf. Kanäle, die zwischen pyramidenstumpfförmigen oder kegelstumpfförmigen Erhebungen ausgebildet sind, weisen einen dreieckigen Querschnitt auf, wenn die unteren Seitenkanten benachbarter Erhebungen zusammenfallen, sonst einen trapezförmigen Querschnitt. Die Kanäle, die zwischen benachbarten Erhebungen ausgebildet sind, weisen also einen zu dem Längsschnitt durch die Erhebungen komplementären Querschnitt auf.

Es kann aber auch vorgesehen sein, dass die Kanäle einen kantenlosen Querschnitt haben, beispielsweise einen kreisförmigen oder elliptischen Querschnitt haben.

Die Kanäle können als parallel angeordnete Kanäle ausgebildet sein, die beispielsweise ein Kreuzmuster bilden. Die Kanallängsachse kann geradlinig oder gekrümmt ausgebildet sein. Die Kanäle sind vorteilhafterweise so ausgebildet, dass sie die Erhebungen umschließen.

Die erfindungsgemäßen Oberflächenstrukturen können durch ein Werkzeug bei Herstellung der Oberfläche in die Oberfläche eingebracht werden. Beispielsweise kann ein beliebiger Körper, wie etwa eine Walze, mit einem elastomeren Material umspritzt werden, wobei die Oberfläche der Spritzform das Formwerkzeug zur Abformung der Oberflächenstruktur bildet.

Es ist weiter möglich, dass ein bahnförmiger elastomerer Körper während seiner Herstellung geprägt wird oder dass er nachträglich verformt wird, beispielsweise thermoverformt wird. Es kann vorgesehen sein, dass er in einem Zustand verformt wird, in dem er noch kein gummielastisches Verhalten aufweist.

Das Präge- oder Formwerkzeug kann durch Ätzen, Lithographie, Laser-Ablation oder andere zur Mikro-Strukturierung geeignete Techniken als Negativ-Form ausgebildet werden.

Es kann weiter vorgesehen sein, dass der Körper eine Folie, insbesondere eine Laminier- oder Transferfolie ist. Die Oberflächenstruktur kann also beispielsweise in eine Transferschicht der Transferfolie abgeformt sein. Die Übertragung der Transferschicht ist besonders vorteilhaft auf ebene oder walzenförmige Körper möglich, wobei auch Oberflächen eines Körpers nachträglich, beispielsweise anlässlich einer Wartung oder Instandsetzung beschichtet werden können.

Es kann vorgesehen sein, dass die mit der Oberflächenstruktur versehenen Oberfläche des Körpers eine Anti-Rutsch-Oberfläche bildet, insbesondere an mit Flüssigkeiten bedeckten Substraten.

Es kann weiter vorgesehen sein, dass die mit der Oberflächenstruktur versehenen Oberfläche des Körpers eine Anti-Stick-Slip-Oberfläche bildet, insbesondere an trockenen Substraten.

Der erfindungsgemäße Körper bzw. die erfindungsgemäße Schicht können vielfältige Anwendung finden, beispielsweise
- als Scheibenwischerblatt,
- als elastische Dichtung,
- für Haltevorrichtungen und Greifer,
- zur Verbesserung der Haptik,
- für Kondome,
- für Schuhe und Handschuhe,
- für Handprothesen,
- für Spritzenkolben oder deren Widerlager,
- für hydraulische Kolben oder deren Widerlager,
- für Scheibendichtungen für bewegliche Fahrzeugscheiben,
- als Anti-Rutsch-Oberfläche und
- als Anti-Stick-Slip-Oberfläche.

Der erfindungsgemäße Körper kann auch in der Sicherheitstechnik eingesetzt werden.

Es kann ein Sicherheitselement mit mindestens einem ersten haptisch wahrnehmbarem Bereich vorgesehen sein, bei dem das Sicherheitselement einen erfindungsgemäßen Körper aufweist, und bei dem der mindestens eine erste haptisch wahrnehmbare Bereich von der Oberfläche der Oberflächenstruktur dieses Körpers gebildet ist.

Weiter kann das Sicherheitselement einen zweiten haptisch wahrnehmbaren Bereich aufweisen, dessen haptische Eigenschaften sich von den haptischen Eigenschaften des mindestens einen ersten haptisch wahrnehmbaren Bereichs unterscheiden. Beispielsweise kann es sich bei dem Sicherheitselement um ein Sicherheitsdokument, wie eine Banknote, handeln, bei dem optisch nicht sichtbare Bereiche haptisch wahrnehmbar sind und ein Sicherheitsmerkmal darstellen.

Die Erfindung wird nun anhand von Ausführungsbeispielen näher erläutert. Es zeigen
- Fig. 1a: ein erstes Ausführungsbeispiel eines Körpers mit einer erfindungsgemäßen Oberflächenstruktur in dreidimensionaler Darstellung;
- Fig. 1b: ein zweites Ausführungsbeispiel eines Körpers mit einer erfindungsgemäßen Oberflächenstruktur in dreidimensionaler Darstellung;
- Fig. 2: eine Vergleichs-Darstellung der Reibung in unterschiedlichen Umgebungen für nicht strukturierte und erfindungsgemäß strukturierte Oberflächen;
- Fig. 3: ein Vergleichs-Diagramm der Reibung für nicht strukturierte und erfindungsgemäß strukturierte Oberflächen;
- Fig. 4: ein Diagramm zum zeitlichen Verlauf der Reibkraft und der Normalkraft für eine nicht strukturierte Oberfläche in trockener Umgebung;
- Fig. 5: ein Diagramm zum zeitlichen Verlauf der Reibkraft und der Normalkraft für eine erfindungsgemäße Oberfläche in trockener Umgebung;
- Fig. 6: ein Diagramm zum zeitlichen Verlauf der Reibkraft und der Normalkraft für eine nicht strukturierte Oberfläche in durch Öl verschmutzter Umgebung;
- Fig. 7: ein Diagramm zum zeitlichen Verlauf der Reibkraft und der Normalkraft für eine erfindungsgemäße Oberfläche in durch Öl verschmutzter Umgebung;
- Fig. 8: ein drittes Ausführungsbeispiel eines Körpers mit einer erfindungsgemäßen Oberflächenstruktur in schematischer Draufsicht;
- Fig. 9a: eine schematische Schnittdarstellung einer ersten Variante des Körpers in Fig. 8 längs der Schnittlinie IX-IX in Fig. 8;
- Fig. 9b: eine schematische Schnittdarstellung einer zweiten Variante des Körpers in Fig. 8 längs der Schnittlinie IX-IX in Fig. 8;
- Fig. 9c: eine schematische Schnittdarstellung einer dritten Variante des Körpers in Fig. 8 längs der Schnittlinie IX-IX in Fig. 8.

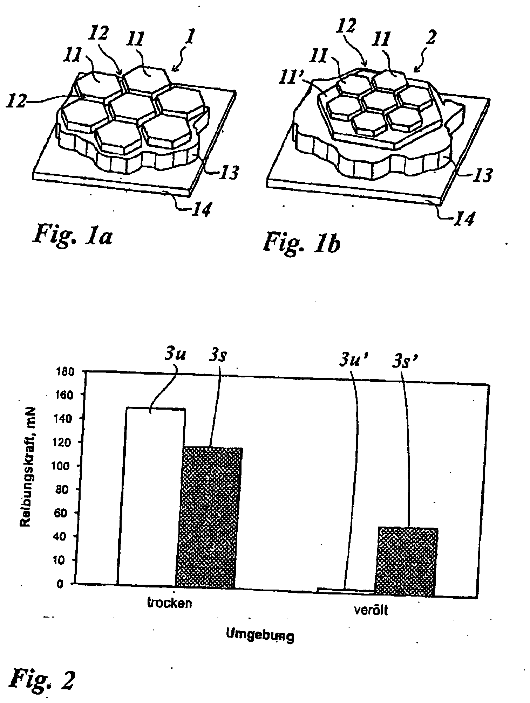

Fig. 1a zeigt einen Ausschnitt eines Körpers 14 mit einer Oberflächenstruktur 1, die eine Vielzahl gleichartig ausgeformter Erhebungen 11 aufweist, die durch Kanäle 12 voneinander getrennt sind. Die Erhebungen 11 sind in einer Strukturschicht 13, die auf dem Körper 14 angeordnet ist, abgeformt und bilden ein Muster, vorzugsweise ein Mikro-Muster. Die Oberflächenstruktur 1 kann auch in dem Körper 14 abgeformt sein, wenn es sich um einen elastomeren Körper handelt, so dass die Strukturschicht 13 integraler Bestandteil des Körpers ist. Wenn es sich bei dem Körper 14 um einen Körper mit einer ebenen Oberfläche oder mit einer einfach gekrümmten Oberfläche handelt, wie beispielsweise eine Walzenoberfläche, kann die Strukturschicht 13 vorteilhafterweise als eine Folie oder als eine Folienschicht ausgebildet sein. Es kann sich beispielsweise um die Übertragungsschicht einer Transferfolie, zum Beispiel einer Heißprägefolie, handeln. Es ist aber auch möglich, dass die Strukturschicht 13 eine aufgespritzte oder aufgegossene Schicht ist, in die beispielsweise durch einen Formstempel oder in einer Spritzform die Erhebungen 11 ausgeformt sind. Bei den Erhebungen 11 kann es sich vorzugsweise um prismatische, zylindrische oder pilzförmige Erhebungen handeln. In dem in Fig. 1a dargestellten Ausführungsbeispiel sind die Erhebungen 11 als prismatische Erhebungen mit einer als regelmäßiges Sechseck ausgebildeten Stirnfläche ausgebildet. Die Stirnflächen liegen in einer gemeinsamen Ebene, die die Außenfläche der Strukturschicht 13 bildet.

Für die weiter unten beschriebene Funktion der Oberflächenstruktur 1 wesentlich ist, dass die Strukturschicht 13 aus einem elastomeren Material gebildet ist, beispielsweise aus Gummi oder einem elastomeren Kunststoff.

Die maximale Flächenausdehnung der Stirnflächen der Erhebungen 11 kann beispielsweise etwa 10 µm betragen. In dem in Fig. 1a dargestellten Ausführungsbeispiel sind die Stirnflächen der Erhebungen 11 als regelmäßige Sechsecke ausgebildet. Die maximale Flächenausdehnung der Erhebungen 11 ist daher der Abstand zweier gegenüberliegender Ecken des Sechsecks. Die geometrische Form der Stirnfläche der Erhebungen 11 ist jedoch nicht auf das Sechseck, insbesondere das regelmäßige Sechseck beschränkt. Die Erhebungen 11 können beispielsweise auch eine rechteckige, insbesondere quadratische, dreieckige oder kreisförmige Stirnfläche aufweisen. Regelmäßige Sechsecke, Quadrate und gleichseitige Dreiecke können bevorzugt sein, weil sie in besonders einfacher Weise ein flächenfüllendes Muster bilden können.

Die Kanäle 12, die benachbarte Erhebungen 11 voneinander trennen, weisen einen rechteckigen Querschnitt auf. Sie können jedoch auch einen anderen Querschnitt, beispielsweise einen dreieckigen oder kreisförmigen Querschnitt, aufweisen. Wie in Fig. 1a weiter zu erkennen, ist die Höhe der Erhebung 11 der Abstand zwischen der Kanalsohle und der Oberkante bzw. der Stirnfläche der Erhebung.

Fig. 1b zeigt in einem weiteren Ausführungsbeispiel eine Oberflächenstruktur 2, die sich von der in Fig. 1a gezeigten Oberflächenstruktur 1 dadurch unterscheidet, dass Erhebungen 11 und 11' in hierarchischen Ebenen übereinander angeordnet sind. Die Erhebungen 11 bilden nun eine obere Ebene und sind, zu Gruppen angeordnet, auf Erhebungen 11' angeordnet, die eine weitere, unter der ersten Ebene angeordnete Ebene bilden. In dem in Fig. 1b dargestellten Ausführungsbeispiel sind jeweils sieben Erhebungen 11 auf einer Erhebung 11' angeordnet. Zur vereinfachten Darstellung ist in Fig. 1b nicht dargestellt, dass auch die Erhebungen 11' ein Muster bilden, dass analog zu der Anordnung der Erhebungen 11 ausgebildet sein kann.

Die erfindungsgemäße Oberflächenstruktur bewirkt grundsätzlich zwei Effekte im Vergleich mit einer nicht strukturierten glatten Oberfläche, nämlich die Verhinderung des Stick-Slip-Effektes an trockenen Oberflächen und die Erhöhung der Reibungskraft an mit Flüssigkeit benetzten Flächen, zum Bespiel mit Wasser oder Öl benetzten Flächen. Der Stick-Slip-Effekt bezeichnet das Ruckgleiten von gegeneinander bewegten Festkörpern. Dabei tritt eine schnelle Bewegungsfolge aus Haften, Verspannen, Trennen und Abgleiten der in Kontakt befindlichen Oberflächen auf. Die dabei erzeugten Schwingungen können als Geräusch abgestrahlt werden. Beispiele sind das Quietschen von Eisen- oder Straßenbahn bei Kurvenfahrt oder beim Bremsen und ratternde Scheibenwischer auf trockenen Autoscheiben. Weil die in der Oberfläche ausgebildeten Erhebungen 11 im Wesentlichen unabhängig voneinander beweglich sind und das Ruckgleiten nur noch an den wenigen Erhebungen auftritt, die nicht ausweichen können, ist der Stick-Slip-Effekt eliminiert, wie weiter unten näher beschrieben.

Durch die Mikrostrukturierung wird die Oberfläche in kleine Flächenabschnitte zerlegt, wobei die Flüssigkeit von den Flächenabschnitten in die zwischen den Flächenabschnitten angeordneten Kanäle gelenkt und dort abgeführt wird.

Fig. 2 zeigt in einer Vergleichs-Darstellung die Reibungsverhältnisse in unterschiedlichen Umgebungen für nicht strukturierte und erfindungsgemäß strukturierte Oberflächen. Die in Versuchsreihen bestimmten Ergebnisse sind in einem Säulendiagramm dargestellt, wobei die Höhe der Säule den mittleren Betrag der zwischen der Oberfläche eines Versuchskörpers und eines glatten Untergrunds gemessenen Reibungskraft angibt.

Bei trockenem glattem Untergrund und einer nicht strukturierten Oberfläche wurde mit 150 mN die höchste Reibungskraft 3u gemessen. Sie war höher als die bei trockenem Untergrund und einer strukturierten Oberfläche gemessene Reibungskraft 3s, die 120 mN betrug. Nun wurden die Messungen bei einem mit Öl benetzten Untergrund wiederholt. Die nun bei der Paarung der nicht strukturierten Oberfläche mit dem ölbenetzten Untergrund gemessene Reibungskraft 3u' war mit 2 mN die kleinste der gemessenen Reibungskräfte. Die Reibungskraft 3u' war so niedrig, dass zwischen den beiden Flächen praktisch keine Kraftübertragung mehr möglich war bzw. die Reibung war vernachlässigbar. Die Reibungskraft 3u' betrug nur noch 1,3 % des ursprünglichen Wertes. Demgegenüber war die bei der Paarung der strukturierten Oberfläche mit dem ölbenetzten Untergrund gemessene Reibungskraft 3s' mit 55 mN zwar kleiner als die für trockenen Untergrund gemessene Reibungskraft 3s, jedoch noch immer ausreichend für eine sichere Kraftübertragung. Die Reibungskraft 3s' betrug immer noch 50 % des ursprünglichen Wertes.

Ein weiterer vorteilhafter Effekt der erfindungsgemäßen Oberflächenstruktur ist die Eliminierung des sogenannten Stick-Slip-Effektes, der an trockenen Oberflächen eintritt.

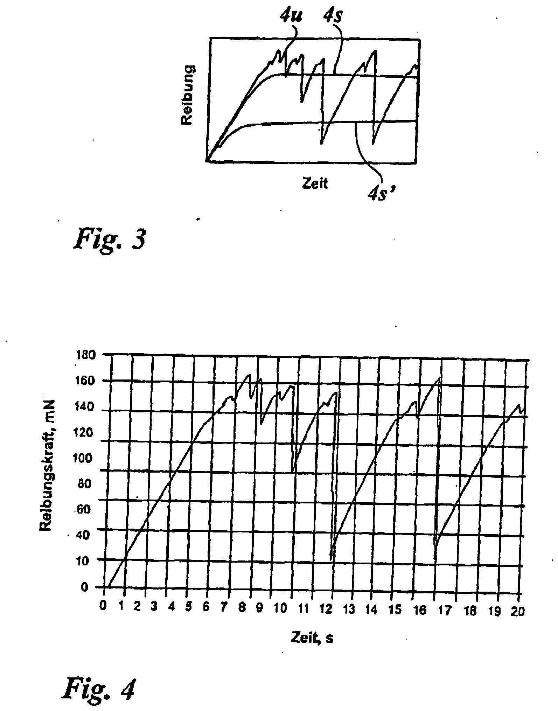

Fig. 3 zeigt in einem Prinzipdiagramm einen zeitabhängigen Reibungsverlauf 4u an einer unstrukturierten Oberfläche und im Vergleich Reibungsverläufe 4s und 4s' an einer erfindungsgemäßen Oberfläche. Der Reibungsverlauf 4u an der nicht strukturierten Oberfläche ist typisch für den Stick-Slip-Effekt. Der Reibungswert steigt zunächst kontinuierlich an und zeigt dann in kurzer Abfolge nach oben und nach unten ausgerichtete Ausschläge, die zu den vorstehend beschriebenen störenden Schwingungen führen. Dagegen zeigen die Reibungsverläufe 4s und 4s' an der erfindungsgemäßen Oberfläche keinen Stick-Slip-Effekt. Vielmehr stellt sich nach dem anfänglichen Anstieg des Reibwertes ein im Wesentlichen konstanter Reibwert ein. Der unterschiedliche mittlere Reibwert der Reibungsverläufe 4s und 4s' resultiert aus unterschiedlichen Tiefen-zu-Breiten-Verhältnissen, auch als "aspect ratio" bekannt. Das Tiefen-zu-Breiten-Verhältnis ist das Verhältnis der Höhe der Erhebungen 10 bzw. 10' zu dem Durchmesser des Querschnitts. Der Reibungsverlauf 4s wurde für ein niedriges Tiefen-zu-Breiten-Verhältnis gemessen, der niedrigere Reibungsverlauf 4s' wurde für ein hohes Tiefen-zu-Breiten-Verhältnis gemessen. Mit steigendem Tiefen-zu-Breiten-Verhältnis sinkt folglich der Reibwert, und zwar sowohl an trockenen als auch an mit Flüssigkeiten bedeckten Oberflächen.

Wie sich weiter gezeigt hat, kann die erfindungsgemäße Oberflächenstruktur durch Wahl der charakteristischen Abmessungen für eine optimale Haftung, d. h. für einen optimalen Reibwert oder für einen niedrigen Stick-Slip-Effekt optimiert werden.

**Tabelle 1**

| | **Optimierung für hohe Reibung in der Flüssigkeit** | **Optimierung für niedrigen Stick-Slip-Effekt auf trockenen Oberflächen** |
|---|---|---|
| maximale Abmessung der Erhebungen | 0,5 µm bis 5 mm | 0,5 µm bis 5 mm |
| Höhe der Erhebungen | 1 % bis 100 % der maximalen Abmessung der Stirnflächen | 1 % bis 1000 % der maximalen Abmessung der Stirnflächen |
| Flächenanteil der Stirnflächen der Erhebungen zur Gesamtfläche | 20 % bis 99 % | 20 % bis 99 % |

Die Fig. 4 bis 7 zeigen nun Diagramme zum zeitlichen Verlauf der Reibkraft für die weiter oben in Fig. 2 beschriebenen Messungen. Die durchgezogene Kurve bezeichnet die Reibungskraft.

Fig. 4 zeigt den zeitlichen Verlauf der Reibkraft für eine nicht strukturierte Oberfläche in trockener Umgebung (Pos. 3u in Fig. 2). Die Reibungskraft weist den weiter oben in Fig. 3 beschriebenen schwankenden Verlauf auf, der typisch für den Stick-Slip-Effekt ist.

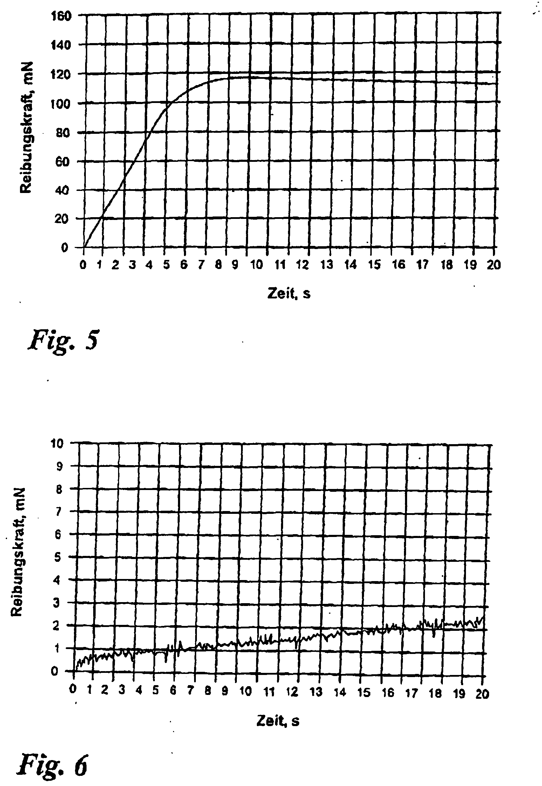

Fig. 5 zeigt den zeitlichen Verlauf der Reibkraft für eine strukturierte Oberfläche in trockener Umgebung (Pos. 3s in Fig. 2). Die Reibungskraft weist den weiter oben in Fig. 3 beschriebenen Verlauf auf, d. h. es tritt bei der erfindungsgemäßen strukturierten Oberfläche kein Stick-Slip-Effekt ein.

Fig. 6 zeigt den zeitlichen Verlauf der Reibkraft für eine nicht strukturierte Oberfläche in durch Öl verschmutzter Umgebung (Pos. 3u' in Fig. 2). Hier ist kein Stick-Slip-Effekt zu sehen (die Schwankungen im Kurvenverlauf rühren vom Messgerät her).

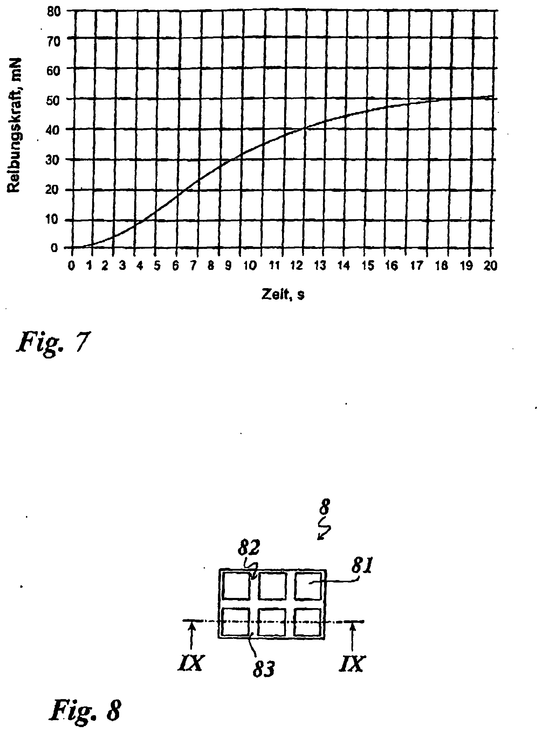

Fig. 7 zeigt den zeitlichen Verlauf der Reibkraft für eine strukturierte Oberfläche in durch Öl verschmutzter Umgebung (Pos. 3s' in Fig. 2). Es tritt kein Stick-Slip-Effekt ein. Die Reibkraft ist im Vergleich zu Fig. 6 infolge der erfindungsgemäßen Oberflächenstruktur des Prüfkörpers deutlich erhöht.

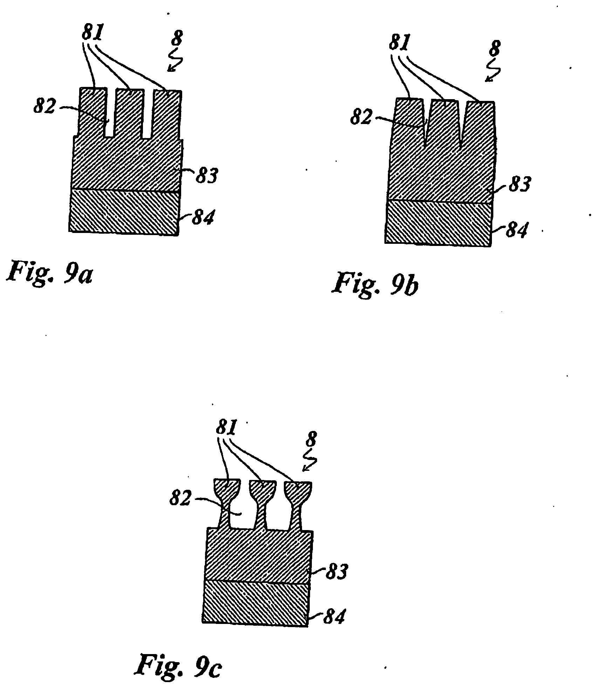

Fig. 8 zeigt nun in der Draufsicht einen Körper 84 (siehe Fig. 9a bis 9c) mit einer in einer Strukturschicht 83 abgeformten Oberflächenstruktur 8, die aus Erhebungen 81 mit quadratischer Stirnfläche gebildet ist. Die Stirnflächen der Erhebungen 81 sind in einer Ebene angeordnet, ebenso die Grundflächen der Erhebungen 81. Zwischen benachbarten Erhebungen 81 sind Kanäle 82 ausgebildet, wobei die Grundfläche der Kanäle 82 in der Ebene der Grundflächen der Erhebungen 81 verläuft.

Die Fig. 9a bis 9c zeigen unterschiedliche Varianten der Erhebungen in Fig. 8, die sich hinsichtlich ihrer Längsschnittsform voneinander unterscheiden. Bei den Fig. 9a bis 9c handelt es sich um schematische Darstellungen, die die wahren Größenverhältnisse nicht wiedergeben.

Fig. 9a zeigt Erhebungen 81, die als prismenförmige Erhebungen ausgebildet sind. Sie sind folglich im Längsschnitt rechteckig ausgebildet. Ein rechteckiger Längsschnitt wäre auch für zylinderförmige Erhebungen charakteristisch, die eine kreisförmige oder ellipsenförmige Stirnfläche aufweisen. Die Kanäle 82, die zwischen benachbarten Erhebungen 81 ausgebildet sind, weisen einen rechteckigen Querschnitt auf.

Fig. 9b zeigt Erhebungen 81, die als pyramidenstumpfförmige Erhebungen ausgebildet sind. Sie sind folglich im Längsschnitt trapezförmig ausgebildet. Ein trapezförmiger Längsschnitt wäre auch für kegelstumpfförmige Erhebungen charakteristisch, die eine kreisförmige oder ellipsenförmige Stirnfläche aufweisen. Die Kanäle 82, die zwischen benachbarten Erhebungen 81 ausgebildet sind, weisen einen dreieckigen Querschnitt auf, wenn, wie in Fig. 9b dargestellt, die unteren Seitenkanten benachbarter Erhebungen 81 zusammenfallen. Die Kanäle 82 können jedoch auch einen trapezförmigen Querschnitt aufweisen, wenn die unteren Seitenkanten benachbarter Erhebungen 81 voneinander beabstandet sind.

Fig. 9c zeigt Erhebungen 81, die als pilzförmige Erhebungen ausgebildet sind. Sie sind folglich im Längsschnitt pilzförmig ausgebildet. Ein pilzförmiger Längsschnitt wäre auch für pilzförmige Erhebungen charakteristisch, die statt der quadratischen Stirnfläche eine kreisförmige oder ellipsenförmige oder sechseckige Stirnfläche aufweisen. Die Kanäle 82, die zwischen benachbarten Erhebungen 81 ausgebildet sind, weisen einen zu dem Längsschnitt durch die Erhebungen 81 komplementären Querschnitt auf.

In den in Fig. 9a bis 9c dargestellten Ausführungsbeispielen sind die Kanäle 82 als parallel angeordnete prismatische Kanäle ausgebildet, die ein Kreuzmuster bilden. Bei zylinderförmigen oder kegelstumpfförmigen Erhebungen können die Kanäle zwar einen beispielsweise rechteckigen, dreieckigen, trapezförmigen oder komplementär pilzförmigen Querschnitt aufweisen, doch variiert der Querschnitt zumindest hinsichtlich seiner Abmessungen längs der Kanallängsachse, die statt geradlinig auch krummlinig ausgebildet sein kann. Die Kanäle sind vorteilhafterweise so ausgebildet, dass sie die Erhebungen umschließen.

### Bezugszeichenliste

- 1, 2, 8: Oberflächenstruktur
- 3s, 3s': Reibwert für strukturierte Oberfläche
- 3u, 3u': Reibwerte für unstrukturierte Oberfläche
- 4s, 4s': Reibungsverlauf für strukturierte Oberfläche
- 4u: Reibungsverlauf für unstrukturierte Oberfläche
- 11, 11', 81: Erhebung
- 12, 82: Kanal
- 13, 83: Strukturschicht
- 14, 84: Körper

## Patentansprüche

1. Körper, bestehend aus einem elastomeren Material oder aufweisend eine äußere elastomere Schicht, wobei in einem Bereich des Körpers in die Oberfläche des elastomeren Körpers oder in die äußere elastomere Schicht des Körpers eine das Reibungsverhalten verbessernde Oberflächenstruktur abgeformt ist,
**dadurch gekennzeichnet,**
**dass** die Oberflächenstruktur (1, 8) eine Vielzahl von Erhebungen (11, 81) aufweist, die von prismatischer, pyramidenstumpfförmiger, zylindrischer, kegelstumpfförmiger oder pilzförmiger Form sind, die durch Kanäle (12, 82) voneinander beabstandet sind, und deren Stirnflächen eine gemeinsame Ebene aufspannen, wobei die maximale Flächenausdehnung der Stirnflächen der Erhebungen (11, 81) jeweils im Bereich von 100 nm bis 300 µm liegt und wobei die Höhe der Erhebungen (11, 11', 81) 1 % bis 100 % der maximalen Abmessung der Stirnfläche der jeweiligen Erhebung ist.

2. Körper nach Anspruch 1,
**dadurch gekennzeichnet,**
**dass** die Stirnflächen der Erhebungen (11, 81) der Oberflächenstruktur (1, 8) gleichförmig ausgebildet sind und insbesondere die Form eines Quadrats, eines gleichschenkligen Dreiecks, regelmäßigen Sechsecks oder anderen Vielecks besitzen.

3. Körper nach Anspruch 1 oder 2,
**dadurch gekennzeichnet,**
**dass** die Erhebungen (11, 11') in hierarchischen Ebenen angeordnet sind, wobei jeweils kleinere Erhebungen auf größeren Erhebungen angeordnet sind.

4. Körper nach einem der vorangehenden Ansprüche,
**dadurch gekennzeichnet,**
**dass** die Erhebungen (11) einen rechteckigen, trapezförmigen oder pilzförmigen Längsschnitt aufweisen.

5. Körper nach einem der vorangehenden Ansprüche,
**dadurch gekennzeichnet,**
**dass** der Flächenanteil der Stirnflächen der Erhebungen (11, 11', 81) an der Gesamtfläche der Stirnflächen der Erhebungen (11, 11', 81) und Kanäle (12) im Bereich von 5 % bis 99 % liegt, vorzugsweise im Bereich von 20 % bis 99 % liegt.

6. Körper nach einem der vorangehenden Ansprüche,
**dadurch gekennzeichnet,**
**dass** die Kanäle (12) einen kantigen Querschnitt haben, beispielsweise einen sechseckigen, rechteckigen, dreieckigen, trapezförmigen oder vieleckigen Querschnitt haben.

7. Körper nach einem der Ansprüche 1 bis 5,
**dadurch gekennzeichnet,**
**dass** die Kanäle (12) einen kantenlosen Querschnitt haben, beispielsweise einen kreisförmigen oder elliptischen Querschnitt haben.

8. Körper nach einem der vorangehenden Ansprüche,
**dadurch gekennzeichnet,**
**dass** der Körper eine Folie, insbesondere eine Laminier- oder Transferfolie ist.

9. Körper nach einem der vorangehenden Ansprüche,
**dadurch gekennzeichnet,**
**dass** der Körper ein Scheibenwischerblatt ist.

10. Körper nach einem der Ansprüche 1 bis 8,
**dadurch gekennzeichnet,**
**dass** der Körper eine elastische Dichtung ist.

11. Sicherheitselement mit mindestens einem ersten haptisch wahrnehmbarem Bereich,
**dadurch gekennzeichnet,**
**dass** das Sicherheitselement einen Körper nach einem der Ansprüche 1 bis 8 aufweist, und dass der mindestens eine erste haptisch wahrnehmbare Bereich von der Oberfläche der Oberflächenstruktur dieses Körpers gebildet ist.

12. Sicherheitselement nach Anspruch 11,
**dadurch gekennzeichnet,**
**dass** das Sicherheitselement einen zweiten haptisch wahrnehmbaren Bereich aufweist, dessen haptische Eigenschaften sich von den haptischen Eigenschaften des mindestens einen ersten haptisch wahrnehmbaren Bereichs unterscheiden.

## Claims

1. Body, consisting of an elastomeric material or having an outer elastomeric layer, wherein a surface structure improving the friction behaviour is moulded into the surface of the elastomeric body or into the outer elastomeric layer of the body in a region of the body,
**characterised in that**
the surface structure (1, 8) has a plurality of projections (11, 81), which are of a prismatic, truncated pyramid, cylindrical, frusto-conical or mushroom-shaped form, which are spaced apart from one another by channels (12, 82) and whose end surfaces span a common plane, wherein the maximum surface area of the end surfaces of the projections (11, 81) each lie in a range of from 100nm to 300µm and wherein the height of the projections (11, 11', 81) are 1% to 100% of the maximum dimension of end surface of the respective projection.

2. Body according to claim 1,
**characterised in that**
the end surfaces of the projections (11, 81) of the surface structure (1, 8) are designed uniformly and have in particular the form of a square, an isosceles triangle, a regular hexagon, or another polygon.

3. Body according to claim 1 or 2,
**characterised in that**
the projections (11, 11') are arranged in hierarchical planes, wherein smaller projections are each arranged on larger projections.

4. Body according to one of the preceding claims,
**characterised in that**
the projections (11) have a rectangular, trapezoidal or mushroom-shaped longitudinal section.

5. Body according to one of the preceding claims,
**characterised in that**
the surface area ratio of the end surfaces of the projections (11, 11', 81) to the total area of the end surfaces of the projections (11, 11', 81) and channels (12) lies in the range of 5% to 99%, preferably in the range of 20% to 99%.

6. Body according to one of the preceding claims,
**characterised in that**
the channels (12) have an angular cross-section, for example a hexagonal, rectangular, triangular, trapezoidal or polygonal cross-section.

7. Body according to one of claims 1 to 5,
**characterised in that**
the channels (12) have an edgeless cross-section, for example a circular or elliptical cross-section.

8. Body according to one of the preceding claims,
**characterised in that**
the body is a film, in particular a laminating film or a transfer film.

9. Body according to one of the preceding claims,
**characterised in that**
the body is a screen wiper blade.

10. Body according to one of claims 1 to 8.
**characterised in that**
the body is an elastic seal.

11. Security element having at least one first haptically perceptible region,
**characterised in that**
the security element has a body according to one of claims 1 to 8, and the at least one first haptically perceptible region is formed of the surface of the surface structure of this body.

12. Security element according to claim 11,
**characterised in that**
the security element has a second haptically perceptible region, whose haptic properties differ from the haptic properties of the at least one first haptically perceptible region.

## Revendications

1. Corps constitué d'un matériau élastomère ou présentant une couche élastomère extérieure, sachant qu'une structure superficielle améliorant le comportement de friction est moulée dans la zone du corps dans la surface du corps élastomère ou dans la couche élastomère extérieure du corps,
**caractérisé en ce**
**que** la structure superficielle (1, 8) présente une pluralité de bosses (11, 81), qui présentent une forme prismatique, une forme de pyramide tronquée, une forme cylindrique, une forme de cône tronqué ou une forme de champignon, qui sont espacées les unes des autres par des canaux (12, 82) et dont les surfaces frontales décrivent un plan commun, sachant que l'étendue des surfaces maximale des surfaces frontales des bosses (11, 81) se situe respectivement dans la plage allant de 100 nm à 300 µm et sachant que la hauteur des bosses (11, 11', 81) est 1 % à 100 % de la dimension maximale de la surface frontale de la bosse respective.

2. Corps selon la revendication 1,
**caractérisé en ce**
**que** les surfaces frontales des bosses (11, 81) de la structure superficielle (1, 8) sont réalisées de manière à présenter la même forme et présentent en particulier la forme d'un carré, d'un triangle équilatéral, d'un hexagone régulier ou d'un autre polygone.

3. Corps selon la revendication 1 ou 2,
**caractérisé en ce**
**que** les bosses (11, 11') sont disposées dans des plans hiérarchiques, sachant que des bosses de plus petite dimension sont respectivement disposées sur des bosses de plus grande dimension.

4. Corps selon l'une quelconque des revendications précédentes,
**caractérisé en ce**
**que** les bosses (11) présentent une section longitudinale rectangulaire, trapézoïdale ou en forme de champignon.

5. Corps selon l'une quelconque des revendications précédentes,
**caractérisé en ce**
**que** la proportion en surface des surfaces frontales des bosses (11, 11', 81) sur la surface globale des surfaces frontales des bosses (11, 11', 81) et des canaux (12) se situe dans la plage allant de 5 % à 99 %, de préférence dans la plage allant de 20 % à 99 %.

6. Corps selon l'une quelconque des revendications précédentes,
**caractérisé en ce**
**que** les canaux (12) présentent une section transversale anguleuse, par exemple une section transversale hexagonale, rectangulaire, triangulaire, trapézoïdale ou polygonale.

7. Corps selon l'une quelconque des revendications 1 à 5,
**caractérisé en ce**
**que** les canaux (12) présentent une section transversale non anguleuse, par exemple une section transversale circulaire ou elliptique.

8. Corps selon l'une quelconque des revendications précédentes,
**caractérisé en ce**
**que** le corps est un film, en particulier un film de laminage ou un film de transfert.

9. Corps selon l'une quelconque des revendications précédentes,
**caractérisé en ce**
**que** le corps est un balai d'essuie-glace.

10. Corps selon l'une quelconque des revendications 1 à 8,
**caractérisé en ce**
**que** le corps est un joint d'étanchéité élastique.

11. Elément de sécurité comportant au moins une première zone à perception haptique,
**caractérisé en ce**
**que** l'élément de sécurité présente un corps selon l'une quelconque des revendications 1 à 8, et **en ce que** la première zone à perception haptique au moins au nombre de une est formée par la surface de la structure superficielle dudit corps.

12. Elément de sécurité selon la revendication 11,
**caractérisé en ce**
**que** l'élément de sécurité présente une deuxième zone à perception haptique, dont les propriétés haptiques diffèrent des propriétés haptiques de la première zone à perception haptique au moins au nombre de une.
